# EUROPÄISCHE PATENTANMELDUNG

(11) **EP 3 299 780 A1**
(43) Veröffentlichungstag der Anmeldung: **28.03.2018**
(21) Anmeldenummer: 16190571.6
(22) Anmeldetag: 26.09.2016
(51) Int. Cl.: G01J 3/06, G01J 3/02, G01J 3/28

(54) **VERFAHREN UND SYSTEM ZUM SPEKTROSKOPISCHEN MESSEN OPTISCHER EIGENSCHAFTEN VON PROBEN**

(71) Anmelder: Berthold Technologies GmbH & Co. KG, 75323 Bad Wildbad (DE)
(72) Erfinder: Schleifenbaum, Dr. Frank, 88690 Uhldingen-Mühlhofen (DE); Hutter, Bernd, 75331 Engelsbrand Salmbach (DE)
(74) Vertreter: Patentanwälte Ruff, Wilhelm, Beier, Dauster & Partner mbB

(57) **Zusammenfassung**

Bei einem Verfahren zum spektral aufgelösten Messen optischer Eigenschaften von Proben wird eine Probe in einer Messposition angeordnet, es mittels einer Lichtquelle Licht erzeugt. Spektrale Anteile des Lichts werden als Anregungslicht in einem ersten optischen Pfad zu der Probe übertragen. Durch die Probe emittiertes oder transmittiertes Licht wird in einem zweiten optischen Pfad zu einem Detektor übertragen. In dem ersten optischen Pfad und/oder in dem zweiten optischen Pfad ist ein durchstimmbarer Monochromator angeordnet. Ein Spektrum des emittierten oder transmittierten Lichts wird über einen effektiven Spektralbereich (SPE) durch Verschieben eines spektralen Passbereiches des durchstimmbaren Monochromators aufgenommen. Das Verfahren ist dadurch gekennzeichnet, dass Licht in Form von Lichtpulsen mit vorgebbarer Pulsfrequenz genutzt wird, dass der spektrale Passbereich des durchstimmbaren Monochromators für die Aufnahme eines Spektrums mit einer Verschiebungsgeschwindigkeit kontinuierlich von einer Anfangswellenlänge zu einer Endwellenlänge verschoben wird und dass die Pulsfrequenz des Lichts mit der Verschiebungsgeschwindigkeit des spektralen Passbereichs über eine Steuerung derart synchronisiert wird, dass innerhalb des effektiven Spektralbereichs (SPE) eine Vielzahl von Messungen des emittierten oder transmittierten Lichts an einer entsprechenden Vielzahl von spektralen Stützpunkten (ST1, ST2, STn) erfolgt.

## Beschreibung

Die Erfindung betrifft ein Verfahren zum spektral aufgelösten Messen optischer Eigenschaften von Proben sowie ein zur Durchführung des Verfahrens geeignetes System.

In der biochemischen und pharmakologischen Forschung und im klinischen Bereich werden häufig Verfahren und Systeme zum spektroskopischen Messen optischer Eigenschaften von Proben genutzt, die eine Charakterisierung von Probeneigenschaften über eine Messung der Fluoreszenz, der Lumineszenz und/oder der Absorption erlauben.

Systeme, die neben Fluoreszenzmessungen auch andere Messmethoden ermöglichen, z.B. Lumineszenzmessungen, Absorptionsmessungen etc., werden häufig als Multitechnologieleser oder Multimodeleser bezeichnet. Um eine große Anzahl von Messungen in kurzer Zeit durchführen zu können, werden meist Probenmultiplex-Verfahren angewandt, bei denen die zu untersuchenden Proben in einer Matrixanordnung in Näpfchen (wells) einer Mikrotiterplatte (microwell plate) angeordnet sind und entweder sequentiell oder parallelisiert untersucht werden. Entsprechende Geräte werden häufig als Mikroplattenleser bezeichnet. Mikroplattenleser sind häufig als Multimodeleser aufgebaut, so dass mit einem einzigen Gerät wahlweise unterschiedliche Messmethoden an einer Vielzahl von Proben durchgeführt werden können. Werden jeweils nur einzelne Proben untersucht, spricht man häufig von Küvettensystemen. Es existieren auch Systeme, die beide Probenanordnungen aufnehmen und vermessen können.

Bei der Messung der Fluoreszenz wird die Probe über einen ersten optischen Pfad (meist Anregungspfad genannt) mit Anregungslicht einer bestimmten Anregungswellenlänge beaufschlagt und dadurch in der Probe Fluoreszenzlicht erzeugt. Das aus der Probe emittierte Fluoreszenzlicht (Emissionslicht), welches gegenüber dem Anregungslicht normalerweise zu längeren Wellenlängen (niedrigeren Energien) verschoben ist, wird in einem zweiten optischen Pfad (meist als Emissionspfad bezeichnet) einem Detektor zugeleitet, mit dem die resultierenden Intensitäten gemessen werden. Bei Absorptionsmessungen wird das durch die Probe transmittierte Licht gemessen, dessen Intensität aufgrund von Absorption in der Probe geringer ist als die des Anregungslichts.

Wenn das Anregungslicht aus einer breitbandigen bzw. polychromatischen Lichtquelle stammt, sollten alle Wellenlängen, die nicht der Anregung dienen, unterdrückt werden. Dazu wird bei hochgenauen und empfindlichen Systemen das breitbandige Licht der primären Lichtquelle mit Hilfe eines Monochromators im ersten optischen Pfad aufbereitet. Im Rahmen dieser Anmeldung bezeichnet der Begriff "Monochromator" ein optisches System zur spektralen Isolierung einer bestimmten Wellenlänge bzw. eines begrenzten Wellenlängenbereichs aus einer einfallenden Lichtintensität mit größerer spektraler Bandbreite. Ein durchstimmbarer Monochromator erlaubt dabei in gewissen Grenzen eine stufenlose Einstellung der zu selektierenden Wellenlänge bzw. des zu selektierenden Wellenlängenbereichs. Derjenige Wellenlängenbereich, der vom Monochromator jeweils durchgelassen und nicht geblockt wird, wird in dieser Anmeldung als "spektraler Passbereich" bezeichnet. Bei durchstimmbaren Monochromatoren kann die spektrale Lage des spektralen Passbereichs in gewissen Grenzen eingestellt bzw. verändert werden. Gelegentlich kann auch die spektrale Breite des Passbereichs eingestellt bzw. verändert werden.

Ein Monochromator kann z.B. als dispersiver Monochromator oder als Filtermonochromator oder als Interferenzmonochromator ausgelegt sein.

In einem "dispersiven Monochromator" wird einfallendes Licht mittels eines dispersiven Elements stufenlos aufgefächert bzw. in seine spektralen Anteile zerlegt. Mittels einer Spaltblende wird aus diesem Spektrum ein engerer Spektralbereich um die gewünschte Wellenlänge selektiert, wobei die Spaltbreite dieses Spalts die Bandbreite des ausgewählten Lichts mitbestimmt. Als dispersives Element kann z.B. ein Prisma (wirkt über die Dispersion des Prismenmaterials) oder ein Beugungsgitter (wirkt über Beugung) verwendet werden. Einige Monochromatoren sind als sogenannte Doppelmonochromatoren ausgeführt, bei denen durch Hintereinanderschaltung zweier dispersiver Monochromatoren die Blockung und/oder die spektrale Auflösung gegenüber einem einfachen dispersiven Monochromator gesteigert werden kann. Die Breite des spektralen Passbereichs wird in diesen Fällen durch Verstellen der Spaltbreite des mittleren Spaltes eingestellt, der spektrale Passbereich wird durch konzertiertes Verfahren der beiden dispersiven Elemente verändert.

Filterelemente wie Interferenz-Bandpassfilter, können prinzipiell ebenfalls zur spektralen Isolierung einer bestimmten Wellenlänge bzw. eines engen Wellenlängenbereichs aus einer einfallenden Lichtintensität mit größerer spektraler Bandbreite dienen. Bekannt sind z.B. stufenlos einstellbare Transmissionsfilteranordnung mit mindestens einem spektral durchstimmbaren Transmissionsfilter, z.B. in Form linear variable Filter (LVF). Derartige Anordnungen werden hier als "Filtermonochromator" bezeichnet. Die DE 10 2013 224 463 A1 offenbart Beispiele für durchstimmbare Filtermonochromatoren.

Ein "Interferenzmonochromator" nutzt Interferenzeffekte zur Wellenlängenselektion. Interferenzmonochromatoren nutzen beispielsweise die Vielfachreflektion von Licht an im Wesentlichen planparallel angeordneten und für den relevanten Spektralbereich teildurchlässigen Spiegeln. Bei diesen sogenannten Fabry-Perot Anordnungen kann der spektrale Passbereich durch Änderung des Spiegelabstandes eingestellt werden.

Auch im Emissionspfad wird häufig ein Monochromator zur Wellenlängenselektion genutzt. Die WO 2012/095312 A1 zeigt eine Vorrichtung zur Messung von optischen Eigenschaften von Proben in Mikroplatten, die auch zur Fluoreszenzmessung genutzt werden kann und im Anregungspfad sowie im Emissionspfad einen dispersiven Monochromator aufweist.

Bei den in dieser Anmeldung betrachteten Verfahren und Systemen zum spektral aufgelösten Messen optischer Eigenschaften von Proben werden mithilfe eines Detektors Spektren (eines oder mehrere) des auf die photosensitive Fläche des Detektors fallenden emittierten oder transmittierten Lichts über einen interessierenden effektiven Spektralbereich aufgenommen. Ein Spektrum enthält Information über Eigenschaften des auf den Detektor fallenden Lichts, z.B. seine Intensität, in Abhängigkeit von der Wellenlänge bzw. als Funktion der Wellenlänge des Lichts innerhalb des effektiven Spektralbereichs.

Nach der Art ihrer Erstellung unterscheidet man zwei Formen von Spektren: Wenn die Wellenlänge des emittierten oder transmittierten Lichts konstant gehalten und die Wellenlänge des Anregungslichts mit Hilfe eines durchstimmbaren Monochromators im ersten optischen Pfad durch Verschiebung von dessen spektralem Passbereich variiert wird, erhält man ein Anregungsspektrum oder Excitationsspektrum. Ein Emissionsspektrum (oder Transmissionsspektrum) ist dagegen das Ergebnis eines Scannings, bei dem die Wellenlänge des Anregungslichts fest ist, während der spektrale Passbereich eines durchstimmbaren Monochromators im zweiten optischen Pfad verschoben wird. Werden die spektralen Passbereiche beider Monochromatoren durchgestimmt, spricht man von dreidimensionalen spektralen Scans, durch die dreidimensionale Spektren erzeugt werden.

Für die Aufnahme eines Spektrums über einen größeren effektiven Spektralbereich wird bei durchstimmbaren dispersiven Monochromatoren üblicherweise das dispersive Element relativ zu den Spaltblenden gedreht, um die spektrale Lage des spektralen Passbereichs zu verschieben und dadurch sukzessive Messungen bei unterschiedlichen Wellenlängen des effektiven Spektralbereichs zu ermöglichen. Die EP 2 975 369 A1 beschreibt die dabei etablierte Weise der Ansteuerung eines Monochromators, bei der die aufeinanderfolgenden Wellenlängen zunächst durch Drehen eines optischen Gitters des Monochromators mit Hilfe eines Schrittmotors angefahren werden und nach endgültigem Erreichen der Ziel position (d.h. der gewünschten Wellenlänge) die Drehbewegung gestoppt und die Messung danach gestartet wird. Nach Abschluss der Messung wird über eine diskrete Drehbewegung des Gitters die nächste Wellenlänge des Spektralbereichs abgefahren usw.. Die EP 2 975 369 A1 beschreibt das Problem, dass die Massenträgheit insbesondere des optischen Gitters dazu führt, dass bei schnellen Wechseln zwischen verschiedenen Ausrichtungspositionen bzw. Drehwinkeln des optischen Gitters - bei denen hohe Beschleunigungs- und Bremskräfte entstehen - hochfrequente mechanische Vibrationen des optischen Gitters entstehen können. Um die gewünschte Wellenlängen-Präzision zu erzielen, müssen daher verlängerte Wartezeiten in Kauf genommen werden, in denen die Vibrationen ausklingen und dann tatsächlich nur die gewünschte Wellenlänge auf die nachgeschaltete Schlitzblende trifft. Um dennoch spektrale Messungen bei verschiedenen ausgelesenen Wellenlängen mit hoher Präzision und kurzen Wartezeiten durchführen zu können, wird vorgeschlagen, im Antriebsstrang zwischen Schrittmotor und optischem Gitter Dämpfungselemente einer kontaktlos arbeitenden Wirbelstromdämpfung einzufügen.

### AUFGABE UND LÖSUNG

Es ist eine Aufgabe der Erfindung, ein Verfahren zum spektral aufgelösten Messen optischer Eigenschaften von Proben bereitzustellen, welches Hochdurchsatzmessungen mit hoher Präzision bei relativ kurzen Aufnahmezeiten für ein Spektrum ermöglicht. Es ist eine weitere Aufgabe, ein zur Durchführung des Verfahrens geeignetes System bereitzustellen.

Diese Aufgaben werden gelöst durch ein Verfahren mit den Merkmalen von Anspruch 1 sowie durch ein System mit den Merkmalen von Anspruch 9. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Es wurde erkannt, dass sich durch die etablierte Weise der Ansteuerung eines durchstimmbaren Monochromators, bei der die aufeinanderfolgenden Wellenlängen im Start/Stopp-Betrieb schrittweise durch den Monochromator angefahren werden und die Messung jeweils erst nach endgültigem Erreichen der Zielposition gestartet wird, relativ lange Aufnahmezeiten für ein komplettes Spektrum ergeben können. Die erforderlichen Beschleunigungs- und Abbremsrampen während der Bewegung der Gitter respektive der Filter während des Wechsels zwischen konsekutiven Wellenlängen ergeben relativ lange Gesamt-Messzeiten, insbesondere bei hoher spektraler Auflösung, d.h. bei relativ kleinen Wellenlängen-Schritten zwischen aufeinanderfolgenden Wellenlängen.

Die spezifischen Nachteile eines Start/Stopp-Betriebs bezüglich der Aufnahmezeit für ein Spektrum werden bei Verfahren und Systemen gemäß der beanspruchten Erfindung vermieden.

Bei Verfahren und Systemen der beanspruchten Erfindung wird Licht in Form von Lichtpulsen mit vorgebbarer Pulsfrequenz genutzt. Dadurch können am Detektor die im Licht enthaltenen Informationen mit bestimmten, pulsartig kurzen Zeitintervallen bzw. Messzeitpunkten verknüpft werden.

Um den gepulsten Betrieb zu ermöglichen, kann z.B. das Anregungslicht in Form von Lichtpulsen mit vorgebbarer Pulsfrequenz auf die Probe eingestrahlt werden. Hierzu kann z.B. Anregungslicht in Form von Lichtpulsen mit vorgebbarer Pulsfrequenz mittels einer gepulsten Lichtquelle erzeugt werden. Das System kann hierzu z.B. eine Blitzlampe aufweisen, die zumindest bezüglich der Blitzfrequenz steuerbar ist. Es ist auch möglich, eine kontinuierlich abstrahlende Lichtquelle (CW-Lichtquelle) zu nutzen und das abgestrahlte Licht vor Auftreffen auf die Probe mittels eines steuerbaren mechanischen, elektronischen oder optoelektronischen Verschlusses oder dergleichen in Lichtpulse zu zerlegen bzw. zu zerhacken.

Prinzipiell ist es auch möglich, die Probe kontinuierlich mit Anregungslicht zu bestrahlen und die Zerlegung in Pulse im zweiten optischen Pfad oder erst am Detektor z.B. mittels eines steuerbaren mechanischen, elektronischen oder optoelektronischen Verschlusses oder dergleichen vorzunehmen.

Der spektrale Passbereich des durchstimmbaren Monochromators wird für die Aufnahme eines Spektrums mit einer Verschiebungsgeschwindigkeit kontinuierlich von einer Anfangswellenlänge zu einer Endwellenlänge verschoben. Der Begriff "kontinuierlich" bedeutet hierbei insbesondere, dass während der Aufnahme des Spektrums die Verschiebungsgeschwindigkeit nicht bis zum Stillstand reduziert wird, sondern dass während der Aufnahme des Spektrums immer eine endliche Verschiebungsgeschwindigkeit vorliegt, so dass sich die spektrale Lage des Passbereichs ständig verändert. Die kontinuierliche Verschiebung kann mit gleichförmiger oder ungleichförmiger Geschwindigkeit erfolgen.

Vorzugsweise sollte die Verschiebung stoßfrei verlaufen, also keinen Sprung im Geschwindigkeitsverlauf aufweisen. Unstetigkeiten im Geschwindigkeitsverlauf, also ruckartige Bewegungen, sollten vorzugsweise ebenfalls vermieden werden.

Die Pulsfrequenz des Lichts wird mit der Verschiebungsgeschwindigkeit des spektralen Passbereichs über eine Steuerung derart synchronisiert, dass innerhalb des effektiven Spektralbereichs eine Vielzahl von Messungen des emittierten oder transmittierten Lichts an einer entsprechenden Vielzahl von spektralen Stützpunkten erfolgt. Die Lage der spektralen Stützpunkte im Spektralbereich ergibt sich dabei im Wesentlichen aus den spektralen Positionen des spektralen Passbereichs zum Zeitpunkt eines Lichtpulses, also z.B. beim Aussenden oder Empfangen eines Lichtpulses. Der effektive Spektralbereich erstreckt sich von dem für die Messung interessierenden ersten Stützpunt bis zum spektral gegenüber liegenden interessierenden letzten Stützpunkt. Durch den Pulsbetrieb in Kombination mit der kontinuierlichen Veränderung des spektralen Passbereichs erreicht man eine synchronisierte Momentanbetrachtung eines sich kontinuierlich und stetig verändernden spektralen Passbereichs.

Eine Synchronisierung bzw. ein synchronisierter Betrieb im Sinne dieser Anmeldung liegt vor, wenn die kontinuierliche Verschiebung des Passbereichs, z.B. erzeugt durch eine Motorbewegung, und die Pulserzeugung gleichzeitig bzw. zeitlich überlappend erfolgen. Die Synchronisierung ist in diesem allgemeinen Fall gleichbedeutend mit der Sicherstellung einer Gleichzeitigkeit von Pulserzeugung und kontinuierlicher Verschiebung. Die Pulserzeugung und die Verschiebung müssen nicht zwingend abhängig voneinander erfolgen. Pulserzeugung und Verschiebung können jeweils frei und unbeeinflusst voneinander ablaufen, es muss lediglich eine zeitliche Überlappung vorliegen.

Vorzugsweise erfolgt die Synchronisierung derart, dass eine der beiden Aktionen, also entweder die z.B. durch eine Motorbewegung verursachte Verschiebung oder die Pulserzeugung, gleichzeitig mir der anderen und zusätzlich in Abhängigkeit von dieser erfolgt. Das kann beispielsweise so umgesetzt werden, dass eine Motorsteuerung nach Fahren einer definierten Anzahl von Schritten ein Signal gibt, das die Pulssteuerung zur Erzeugung eines Pulses in einer der oben beschriebenen Arten veranlasst. Hier wird die Pulserzeugung durch die Verschiebung getriggert. Es kann auch so umgesetzt werden, dass die Pulserzeugung ein Signal als die Motorsteuerung absetzt, aus dem diese die zwischen zwei Pulsen zu fahrenden Schritte ermittelt und den Motor entsprechend ansteuert. Hier wird die Verschiebung durch die Pulserzeugung getriggert. Es ist auch möglich, dass die Steuerung den Pulsbetrieb und die Verschiebung in koordinierter Weise triggert. In Falle einer gegenseitigen Abhängigkeit von Pulserzeugung und Verschiebung kann die spektrale Lage der Stützpunkte jeweils genau vorgegeben werden, wodurch präzisere Messungen möglich werden.

Derr Pulsbetrieb in Kombination mit der kontinuierlichen Veränderung des spektralen Passbereichs kann zwar theoretisch zu einer leichten spektralen Verschmierung führen. Deren Größenordnung ist aber in dem meisten oder allen praktischen Fällen vernachlässigbar. Der theoretische Nachteil wird durch erhebliche erzielbare Vorteile (z.B. hinsichtlich Aufnahmezeit für ein Spektrum) mehr als aufgewogen. Andere Fehlerquellen, die aus einem Start/Stopp-Betrieb resultieren, z.B. Vibrationen, können vermieden werden.

Zur beispielhaften quantitativen Veranschaulichung von Vorteilen wird nachfolgend ein System betrachtet, das als Lichtquelle eine Blitzlampe verwendet und einen Schrittmotor zur Erzeugung der Bewegung des verstellbaren optischen Elements des durchstimmbaren Monochromators aufweist. Bei dem Verfahren wird die Drehung des Gitters bzw. die Bewegung der Filteranordnung im Monochromator mit der Blitzfrequenz der Blitzlampe während der Aufnahme eines Spektrums (z.B. Absorptionsspektrum, Excitationsspektrum oder Emissionsspektrum) synchronisiert. Die Motorfahrt des Schrittmotors im Monochromator erfolgt kontinuierlich. Auf Anfahrrampen (vom Stillstand in eine Bewegung) oder Anhalterampen (bis zum Stop der Bewegung) während der Spektrumsaufnahme innerhalb des effektiven Spektralbereichs wird verzichtet. Lediglich zu Beginn und am Ende des spektralen Scans sind Beschleunigungsrampen bzw. Abbremsrampen vorgesehen. Bei der Aufnahme des Spektrums verschiebt sich der spektrale Passbandbereich bzw. Durchlassbereich des Monochromators innerhalb des zu untersuchenden effektiven Spektralbereiches kontinuierlich. Die spektralen Stützunkte werden im Takt der Lichtpulse aufgezeichnet.

Bei manchen Ausführungsformen erfolgt die Ansteuerung so, dass im gewählten effektiven Spektralbereich eine konstante Verschiebungsgeschwindigkeit des spektralen Passbereichs vorliegt. Hierdurch kann u.a. die Synchronisation erleichtert werden. Das Spektrum ist dann direkt auswertefähig und muss nicht hinsichtlich unterschiedlicher Abstände der spektralen Stützpunkte korrigiert werden.

Es ist jedoch auch möglich, dass sich während der kontinuierlichen Verschiebung des spektralen Passbereichs die Verschiebungsgeschwindigkeit zwischen einer endlichen Minimalgeschwindigkeit und einer Maximalgeschwindigkeit ändert.

Bei einer Variante mit veränderlicher Verschiebungsgeschwindigkeit wird bei der Verschiebung des Passbereichs eine Intensitätsänderung des detektierten Lichts zwischen aufeinanderfolgenden spektralen Stützpunkten ermittelt und die Verschiebung des Passbereichs wird in Abhängigkeit von der Intensitätsänderung verändert. Hierdurch kann eine Regelung der Verschiebungsgeschwindigkeit in Abhängigkeit von einer gemessenen Eigenschaft des Spektrums realisiert werden. Die Regelung kann beispielsweise in der Weise antiproportional erfolgen, dass spektrale Bereiche mit relativ starken Intensitätsänderungen mit relativ kleinerer Verschiebungsgeschwindigkeit und entsprechend höherer Stützstellendichte durchfahren werden, während ereignisärmere Spektralbereiche schneller, d.h. mit geringerer Stützstellendichte, durchfahren werden.

Es ist auch möglich, dass vor Beginn einer Aufnahme eines Spektrums Parameter einer Geschwindigkeitsvariationsfunktion voreingestellt werden und die Verschiebungsgeschwindigkeit entsprechend der Geschwindigkeitsvariationsfunktion gesteuert wird. Hier kann die Änderung der Verschiebungsgeschwindigkeit basierend auf vorbekannten Eigenschaften eines untersuchten Spektrumtyps optimiert werden. Die Steuerung kann beispielsweise in der Weise antiproportional erfolgen, dass spektrale Bereiche mit relativ starken Intensitätsänderungen mit relativ kleinerer Verschiebungsgeschwindigkeit und entsprechend höherer Stützstellendichte durchfahren werden, während ereignisärmere Spektralbereiche schneller, d.h. mit geringerer Stützstellendichte, durchfahren werden.

Die Nutzung einer unterschiedlichen Zahl von Stützstellen pro Wellenlängenintervall kann auch für den (nicht zur beanspruchten Erfindung gehörenden) nicht kontinuierlichen Betrieb vorteilhaft sein, also für die move-stop-measure Betriebsart bzw. den Start/Stopp-Betrieb. In diesem Fall kann z.B. die Schrittweite zwischen unmittelbar aufeinander folgenden Stopp-Positionen in unterschiedlichen Wellenlängenbereichen unterschiedlich sein. Beispielsweise kann die Schrittweite in Abhängigkeit von einer vorbekannten oder einer gemessenen Eigenschaft des Spektrums variiert werden. Dies wird als ein von der beanspruchten Erfindung unabhängiger und ggf. selbständig schutzfähiger Aspekt der Offenbarung angesehen.

Ein einmaliger Scan (eine einzelne Aufnahme eines Spektrums) über den effektiven Spektralbereich kann ausreichen. Bei manchen Ausführungsformen ist vorgesehen, dass die Aufnahme eines Spektrums über den effektiven Spektralbereich bei gleicher Synchronisierung der Pulsfrequenz mit der Verschiebungsgeschwindigkeit des spektralen Passbereichs mindestens einmal wiederholt wird und die für jede der Aufnahmen erhaltenen Messwerte wellenlängenrichtig addiert werden. Hierdurch kann auf Kosten einer Vergrößerung der Gesamt-Messzeit eine bessere Messstatistik erzielt werden.

Die Erfindung betrifft auch ein zur Durchführung des Verfahrens geeignetes System zum spektroskopischen Messen optischer Eigenschaften von Probe.

Der durchstimmbare Monochromator kann z.B. als dispersiver Monochromator oder als Filtermonochromator oder als Interferenzmonochromator ausgelegt sein.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.
Fig. 1 zeigt schematisch ein Ausführungsbeispiel eines erfindungsgemäßen Systems zum spektral aufgelösten Messen optischer Eigenschaften von Proben;
Fig. 2 zeigt den Signalfluss zwischen Komponenten des Systems in einem ersten Betriebsmodus;
Fig. 3 zeigt den Signalfluss zwischen Komponenten des Systems in einem zweiten Betriebsmodus;
Fig.4 zeigt ein Diagramm zum Zusammenhang zwischen der Motorgeschwindigkeit eines für die Verstellung eines Monochromators zuständigen Stellmotors und der Zeit bzw. der mit der Zeit korrespondierenden Wellenlänge;
Fig.5 zeigt ein schematisches Diagramm der Abhängigkeit des Fahrwegs des Stellmotors von der Zeit bei einem konventionellen System mit Start/Stopp-Betrieb;
Fig. 6 zeigt ein schematisches Diagramm der Abhängigkeit des Fahrwegs des Stellmotors von der Zeit bei einem Ausführungsbeispiel mit kontinuierlicher Veränderung der spektralen Lage des spektralen Passbereichs;
Fig.7 zeigt ein I(λ)-Diagramm mit einem hypothetischen Spektrum einer Probensubstanz, wobei das Spektrum mit variierender Stützstellendichte abgetastet wird, indem innerhalb des effektiven Spektralbereichs die Verschiebungsgeschwindigkeit des spektralen Passbereichs während der kontinuierlichen Verschiebung in Abhängigkeit von der lokalen Steigung des Spektrums verändert wird.

### DETAILLIERTE BESCHREIBUNG DER AUSFÜHRUNGSBEISPIELE

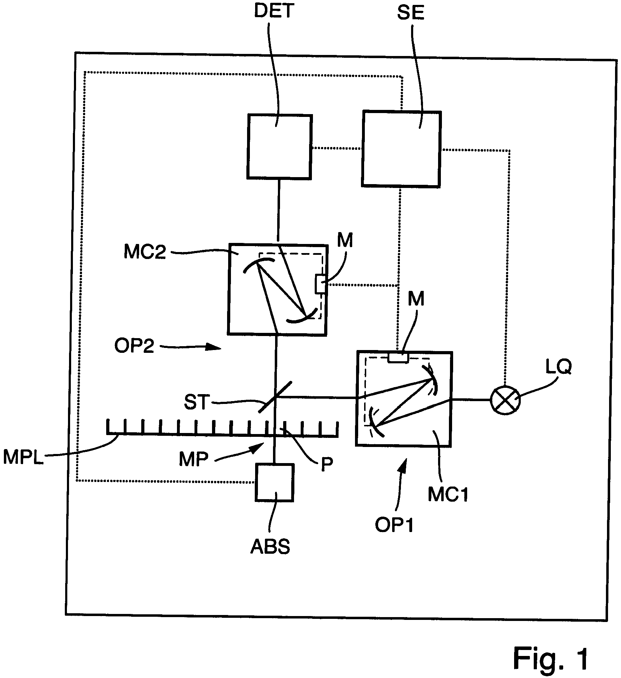

In Fig. 1 ist schematisch ein Ausführungsbeispiel eines erfindungsgemäßen Systems SYS zum spektral aufgelösten Messen optischer Eigenschaften von Proben gezeigt. Das System ist Bestandteil eines Multitechnologielesers, der neben der Messung der Fluoreszenz auch andere Messungen, beispielsweise die Messung der Absorption einer Probe, ermöglicht.

Das System SYS weist eine primäre Lichtquelle LQ in Form einer Xenon-Blitzlampe auf. Die Lichtquelle hat ein breites Emissionsspektrum im sichtbaren Spektralbereich ("Weißlicht"). Die Blitzfrequenz der Lichtquelle ist in gewissen Grenzen einstellbar, so dass Anregungslicht in Form von Lichtpulsen mit vorgebbarer Pulsfrequenz erzeugt werden kann. Die Lichtquelle LQ ist an die Steuereinheit SE des Systems angeschlossen, über welche die Pulsfrequenz eingestellt werden kann.

Ein erster optischer Pfad OP1, auch Anregungspfad genannt, führt von der Lichtquelle LQ über einen durchstimmbaren ersten Monochromator MC1 und eine nachgeschaltete Strahlteileranordnung ST bis zu einer Messposition MP, in der sich bei der Nutzung des Systems eine Probe P befindet. Das Anregungslicht wird im Wesentlichen senkrecht von oben in die Probe eingestrahlt. Die Probe befindet sich in einer Vertiefung (bzw. einem Napf oder Topf) einer mit vielen Töpfen ausgestatteten Mikrotiterplatte MPL.

Bei dem ersten Monochromator MC1 handelt es sich um einen an die Steuereinheit SE angeschlossenen durchstimmbaren dispersiven Monochromator. Die Lage des spektralen Passbereichs des ersten Monochromators MC1 kann in Reaktion auf Steuersignale der Steuereinheit SE über einen großen Spektralbereich kontinuierlich verstellt werden.

Die optischen Elemente des ersten optischen Pfads (Anregungspfad) dienen der Übertragung von spektralen Anteilen von Licht der primären Lichtquelle LQ als Anregungslicht in die Messposition MP. In der Probe befindet sich eine Substanz, die durch das Anregungslicht dazu angeregt werden kann, Fluoreszenzlicht zu emittieren. Das Fluoreszenzlicht ist gegenüber dem Anregungslicht zu niedrigeren Energien bzw. größeren Wellenlängen verschoben. Das Ausmaß der spektralen Rotverschiebung ist für die Substanz spezifisch und wird als Stokes-Verschiebung bzw. Stokes-Shift bezeichnet. In dem Spektrum des Emissionslichts steckt Information über Eigenschaften der Probensubstanz.

Das Emissionslicht gelangt über einen zweiten optischen Pfad OP2 (auch Emissionspfad genannt) von der Probe P zu einem Detektor DET, der in Abhängigkeit vom auftreffenden Licht elektrische Signale erzeugt, die einer Auswerteeinheit zugeführt werden, um das Emissionslicht zur Charakterisierung der Probe spektral auszuwerten. Die Auswerteeinheit kann in die Steuereinheit SE integriert sein.

Im zweiten optischen Pfad befindet sich zwischen der Strahlteileranordnung ST und dem Detektor ein durchstimmbarer zweiter Monochromator MC2, der dafür vorgesehen ist, aus dem Spektrum des Emissionslichts zu jedem Zeitpunkt nur einen engeren Ausschnitt, d.h. einen spektralen Passbereich mit vorbestimmbarer spektraler Lage, zum Detektor durchzulassen. Auch der zweite Monochromator MC2 ist an die Steuereinheit SE angeschlossen, so dass die spektrale Lage des Passbereichs zu jedem Zeitpunkt mittels Steuersignalen der Steuereinheit vorgegeben werden kann.

Unterhalb der Messposition MP ist ein Absorptionsdetektor ABS angeordnet, der ebenfalls an die Steuereinheit SE angeschlossen ist. Mithilfe des Absorptionsdetektors kann die Intensität von Emissionslicht gemessen werden, welches nach Anregung der Probe über den ersten optischen Pfad OP1 durch die Probe und einen transparenten Boden des Topfs hindurch zum Absorptionsdetektor gelangt.

Sowohl der erste Monochromator MC1 im ersten optischen Pfad als auch der zweite Monochromator MC2 liegt in Form eines dispersiven Doppelmonochromators vor. Ein solcher Doppelmonochromator hat insgesamt drei Spalte, nämlich einen Eintrittsspalt, einen Mittenspalt sowie einen Austrittsspalt. Der Mittenspalt ist gleichzeitig Austrittsspalt eines vorgeschalteten ersten dispersiven Monochromators und Eintrittsspalt eines nachgeschalteten zweiten dispersiven Monochromators. Jeder der Spalte wird durch eine entsprechende Spaltblende in einer zugehörigen Spaltebene definiert. Die Spaltbreite ist jeweils stufenlos verstellbar. Bei anderen Ausführungsformen können zum Beispiel aus Kostengründen auch feste Spalte bzw. Spaltbreiten am Eintritt und/oder am Austritt vorgesehen sein.

Innerhalb der Doppelmonochromatoren sind jeweils dispersive Elemente in Form von konkaven Reflexionsgittern vorgesehen. Die Reflexionsgitter sind drehbar gelagert und können mithilfe eines Schrittmotors M synchron miteinander um zueinander parallele Drehachsen gedreht bzw. verschwenkt werden. Dadurch kann der spektrale Passbereich jedes der Monochromatoren für die Aufnahme eines Spektrums mit einer durch die Steuereinheit SE vorgebbaren Verschiebungsgeschwindigkeit kontinuierlich von einer Anfangswellenlänge zu einer Endwellenlänge verschoben werden.

Mithilfe eines Synchronisierungsmoduls in der Software der Steuereinheit SE kann die Pulsfrequenz der Lichtquelle LQ mit der Verschiebungsgeschwindigkeit des spektralen Passbereichs des ersten Monochromators MC1 und/oder des zweiten Monochromators MC2 derart synchronisiert werden, dass innerhalb eines interessierenden effektiven Spektralbereichs eine Vielzahl von Messungen des emittierten oder transmittierten Lichts an einer entsprechenden Vielzahl von spektralen Stützpunkten erfolgen kann.

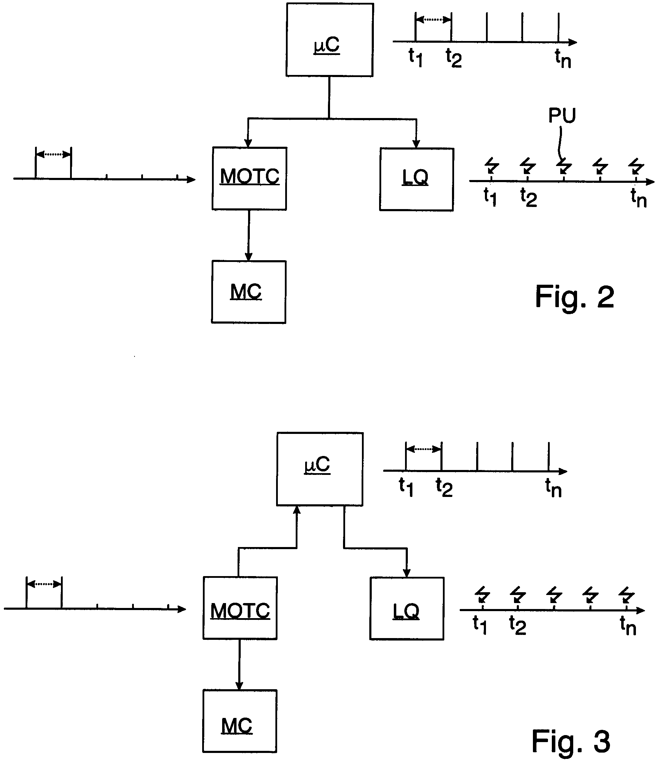

Das System SYS kann in unterschiedlichen Betriebsmodi betrieben werden. Zwei der Betriebsmodi werden beispielhaft anhand der Fig. 2 und 3 erläutert. Diese zeigen jeweils schematische Diagramme zur Signalübertragung zwischen unterschiedlichen Komponenten des Systems. Ein Mikrocontroller µC der Steuereinheit ist signalleitend mit dem Motorcontroller MOTC des Schrittmotors eines Monochromators MC verbunden, bei dem es sich um einen Monochromator im ersten optischen Pfad oder im zweiten optischen Pfad handeln kann. Der Mikrocontroller µC steuert auch den Blitzbetrieb der Lichtquelle LQ, also die Abgabe von Lichtpulsen PU mit vorgebbarer Pulsfrequenz bzw. zu vorgebbaren Zeitpunkten t₁, t₂ etc. Bei dem ersten Betriebsmodus (aus Fig. 2) triggert der Mikrocontroller µC sowohl die Lichtquelle LQ (Blitzlampe) als auch die Motorfahrt des Schrittmotors, der die Drehbewegung des dispersiven Gitters im Monochromator MC und damit die Verschiebung des spektralen Passbereichs steuert. Beim zweiten Betriebsmodus (aus Fig. 3) wird der Motor mit einer vorgebbaren Motorfahrgeschwindigkeit betrieben und die Motorfahrgeschwindigkeit bestimmt die Blitzfrequenz. Es ist auch möglich, dass die Lichtquelle direkt über den Motorcontroller getriggert wird. In diesem Fall ist der Motorcontroller signalleitend mit der Lichtquelle verbunden.

In beiden Betriebsmodi ist es möglich, dass die Drehbewegung des dispersiven Gitters bzw. der dispersiven Gitter eines Monochromators mit der Blitzfrequenz der Blitzlampe während der Aufnahme eines Absorptionsspektrums, eines Exitationsspektrums oder eines Emissionsspektrums synchronisiert wird Dabei erfolgt die Motorfahrt des Motors im Monochromator kontinuierlich (ohne zwischenzeitliche Stopps). Auf Anhalterampen und Bremsrampen während der Spektrumsaufnahme wird verzichtet, diese sind nur zu Beginn und am Ende eines spektralen Scans vorgesehen. Hierdurch verschiebt sich der spektrale Passbandbereich eines Monochromators kontinuierlich und spektrale Stützpunkte des Spektrums werden im Takt der Blitzlampe aufgezeichnet.

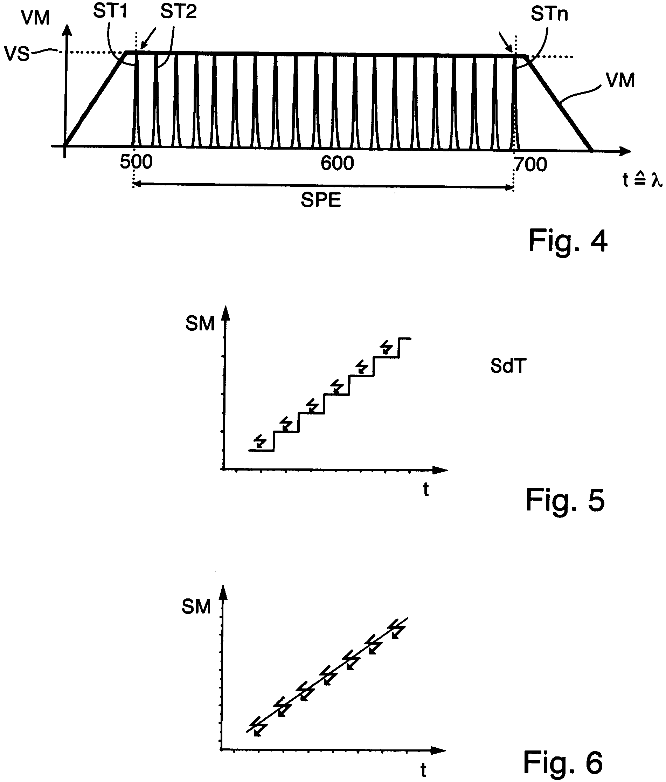

Fig. 4 zeigt zur Veranschaulichung ein schematisches Diagramm, welches den Zusammenhang zwischen der auf der y-Achse aufgetragenen Motorgeschwindigkeit VM des für die Verstellung des Monochromators zuständigen Stellmotors M als Funktion der Zeit t zeigt (durchgezogene Linie). Zu den Zeitpunkten t₁, t₂ etc. gibt die Lichtquelle LQ jeweils einen Blitz bzw. Lichtpuls ab. Da mithilfe des Stellmotors M die spektrale Lage des spektralen Passbereichs des Monochromators verstellt wird, entsprechen die zu unterschiedlichen Zeitpunkten abgegebenen oder empfangenen Lichtpulse unterschiedlichen Wellenlängen λ, so dass die x-Achse auch als Achse für die Wellenlänge λ fungiert.

Bei diesem Pulsbetrieb ergibt jeder Lichtpuls einen spektralen Stützpunkt ST1, ST2 etc. für die spektral aufgelöste Messung der optischen Eigenschaften der Probe. Derjenige Spektralbereich, der sich von dem ersten für die Messung genutzten ersten Stützpunkt ST1 (zum Zeitpunkt t₁) bis zum letzten Stützpunkt STn (zum Zeitpunkt tₙ) erstreckt, wird hier als effektiver Spektralbereich SPE bezeichnet. Die zum ersten Stützpunkt ST1 gehörende Wellenlänge (bzw. die zugehörige spektrale Lage des Passbereichs) wird als Anfangswellenlänge und die zum letzten Stützpunkt STn gehörende Wellenlänge (bzw. die zugehörige spektrale Lage des Passbereichs) als Endwellenlänge bezeichnet. Der Beginn der Messung liegt bei der Anfangswellenlänge, die dem ersten Stützpunkt ST1 entspricht (hier zum Beispiel 500 nm), das Ende der Messung ist am letzten Stützpunkt STn erreicht (der im Beispielsfall einer Endwellenlänge von 690 nm entspricht).

Am zeitlichen Verlauf der Motorgeschwindigkeit VM ist ein wichtiges Charakteristikum des Ausführungsbeispiels gut zu erkennen. Die Motorfahrt des Schrittmotors erfolgt über den gesamten effektiven Spektralbereich SPE, d.h. von der Anfangswellenlänge bis zur Endwellenlänge, kontinuierlich, und zwar im Beispielsfall mit konstanter endlicher Verfahrgeschwindigkeit. Vor Beginn der Messung liegt eine Anfahrrampe, während der der Motor vom Stillstand (Motorgeschwindigkeit null) auf die Verfahrgeschwindigkeit VS für die Spektrenaufnahme beschleunigt wird. Nach Abschluss der Messung, d.h. zeitlich hinter dem Erreichen des letzten Stützpunkts, liegt eine Bremsrampe, während derer die Motorgeschwindigkeit wieder auf null reduziert wird.

Geht man beispielsweise von einem typischen Blitzbetrieb bei 100 Hz aus, so dauert die Aufnahme zum Beispiel eines Fluoreszenzspektrums über einen effektiven Spektralbereich von 200 nm mit einer hohen spektralen Auflösung von 1 nm nur 2 Sekunden (2 s).

Die spektrale Auflösung kann durch Variation der Fahrgeschwindigkeit des Monochromators und/oder entsprechend durch Anpassung der Blitzfrequenz der Blitzlampe eingestellt werden. Wird beispielsweise ein Übersichtsspektrum mit einer spektralen Auflösung von 4 nm aufgenommen, lässt sich ein Spektrum über einen verfügbaren Spektralbereich von 200 nm bis 1000 nm in nur 2 s aufzeichnen. Je nach verwendeter Blitzlampe können auch höhere Blitzfrequenzen, zum Beispiel bis zu 500 Hz, eingesetzt werden, so dass ein solches Spektrum dann rechnerisch bereits in ca. 400 ms aufgenommen werden kann. Wie aus Fig. 4 prinzipiell ersichtlich, sollten zu diesen Werten für die effektive Messzeit noch kürzere Zeitintervalle für die Anfahrrampe und die Bremsrampe hinzuaddiert werden, z.B. in der Größenordnung von 100 ms.

Die auf diese Weise aufgenommenen Spektren weisen theoretisch eine leichte spektrale Verschmierung auf, da die Verstellbewegung des dispersiven Elements (eines oder mehrere) im Monochromator während des Blitzens fortgesetzt wird. Da typische Blitzdauern jedoch häufig in der Größenordnung von 2 µs liegen, die Totzeit jedoch bei typischen Frequenzen von 100 Hz im Bereich von 10 ms liegt, liegt bei einer spektralen Auflösung von theoretischen 1 nm die Verschmierung bei ca. 0,2 pm, was in den meisten oder allen praktischen Fällen vernachlässigbar klein ist. Bei größeren spektralen Schritten zwischen den Stützpunkten (und entsprechend größerer Fahrgeschwindigkeit) wird die Verschmierung größer und kann zum Beispiel bei einer Schrittweite von 10 nm bis auf ca. 2 pm ansteigen, was immer noch für die meisten oder alle Fälle als vernachlässigbar angesehen werden kann.

Zur Veranschaulichung von Unterschieden zum Stand der Technik zeigt Fig. 5 ein schematisches Diagramm der Abhängigkeit des Fahrwegs SM des Stellmotors eines durchstimmbaren Monochromators von der Zeit bei einem konventionellen System mit Start/Stopp-Betrieb (SdT = Stand der Technik). Fig. 6 zeigt ein entsprechendes Diagramm bei einem Ausführungsbeispiel mit kontinuierlicher Veränderung der spektralen Lage des spektralen Passbereichs aufgrund einer konstanten Fahrgeschwindigkeit. Die Blitz-Symbole charakterisieren jeweils einen Blitz oder Lichtpuls. Im Stand der Technik wird der Stellmotor jeweils vor Auslösen eines Blitzes angehalten und der Blitz fällt in eine Stopp-Phase ohne Motorbewegung (Fahrweg ändert sich währen der Ruhephase nicht). Bei Verfahren und Systemen gemäß dieser Anmeldung werden Blitze bei laufendem Stellmotor und dadurch sich verändernder spektraler Lage des Passbereichs ausgelöst.

Insbesondere bei Fluoreszenzmessungen kann es sein, dass ein einzelner Blitz pro spektralem Stützpunkt für empfindliche Messungen zu wenig ist. Um diesem Umstand zu begegnen, kann der synchronisierte spektrale Scan einer Probe einmal oder mehrfach wiederholt werden. Die bei jeder Messung erhaltenen Einzelspektren können dann entsprechend aufaddiert werden. Durch die Aufsummierung der Signale von mehreren Blitzen für jede Wellenlänge bzw. jeden Stützpunkt lässt sich die Messstatistik in ähnlicher Weise verbessern, als wenn eine längere Messzeit pro Wellenlänge genutzt würde.

Bei dem Ausführungsbeispiel von Fig. 4 liegt im gesamten interessierenden effektiven Spektralbereich SPE eine konstante Verschiebungsgeschwindigkeit des spektralen Passbereichs vor. Dies erleichtert die Synchronisation, außerdem sind die auf diese Weise erhaltenen Spektren direkt auswertefähig in dem Sinne, dass keine Korrekturen hinsichtlich unterschiedlicher Abstände der spektralen Stützpunkte vorgenommen werden müssen.

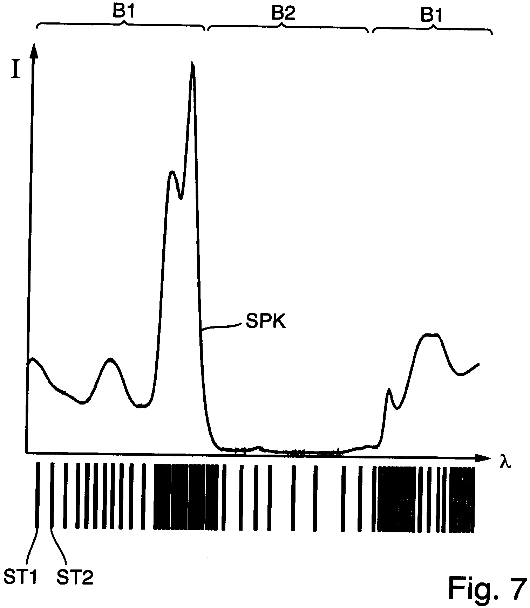

Es kann jedoch auch vorteilhaft sein, innerhalb des effektiven Spektralbereichs die Verschiebungsgeschwindigkeit während der kontinuierlichen Verschiebung zu ändern, ohne jedoch die Verschiebungsbewegung völlig anzuhalten. In Fig. 7 ist hierzu beispielhaft ein i(A)-Diagramm (Intensität I als Funktion der Wellenlänge λ) mit einem hypothetischen Spektrum SPK einer Probensubstanz dargestellt. Es möge sich dabei um ein charakteristisches Spektrum einer bestimmten Substanzklasse handeln, bei dem es in gewissen spektralen Bereichen B1 relativ starke Änderungen der Intensität pro Wellenlänge gibt, während in anderen spektralen Bereichen B2 die Intensität bei sich verändernder Wellenlänge kaum variiert. Die Messung kann hier so durchgeführt werden, dass im Ergebnis die spektrale Dichte von Stützstellen ST1, ST2 in Abhängigkeit von Eigenschaften des Spektrums für unterschiedliche spektrale Bereiche unterschiedlich groß ist. Die Abhängigkeit kann in der Weise vorliegen, dass in Bereichen mit relativ starken Änderungen der Intensität pro Wellenlängenintervall eine relativ hohe spektrale Stützstellendichte vorliegt, während in anderen spektralen Bereichen mit relativ geringeren Änderungen der Intensität (vom Typ B2) eine geringere Stützstellendichte bzw. ein größerer Wellenlängenabstand zwischen benachbarten Stützstellen gewählt wird. Die Stützstellendichte kann näherungsweise oder direkt proportional zum Betrag der ersten Ableitung der Funktion I(λ) sein. Bei konstanter Pulsfrequenz kann dies dadurch erreicht werden, dass die Fahrgeschwindigkeit des Stellmotors so gesteuert wird, dass sie näherungsweise oder direkt umgekehrt proportional zum Betrag der ersten Ableitung der Funktion I(I) ist.

Die Regelung kann beispielsweise so erfolgen, dass der Intensitätsunterschied zweier aufeinanderfolgender spektraler Stützstellen ST(n) und ST(n+1) ermittelt wird und dessen Reziprokwert als Vorfaktor einer zuvor festgelegten Verfahrgeschwindigkeit dient. Somit ist die Änderung des spektralen Passbereichs pro Zeiteinheit ΔλΔ/t klein für große Intensitätsänderungen |*I(ST*(n))-I(ST(n+1)| und damit die Anzahl spektraler Stützstellen direkt proportional zur lokalen spektralen Intensitätsdynamik des Spektrums.

Die Nutzung einer unterschiedlichen Zahl von Stützstellen pro Wellenlängenintervall kann auch für den nicht kontinuierlichen Betrieb vorteilhaft sein, also für die "klassische" move-stop-measure Betriebsart bzw. den Start/Stopp-Betrieb. In diesem Fall kann die Schrittweite zwischen unmittelbar aufeinander folgenden Stopp-Positionen in unterschiedlichen Wellenlängenbereichen unterschiedlich sein.

Beispielsweise kann die Schrittweite in Abhängigkeit von einer vorbekannten oder einer gemessenen Eigenschaft des Spektrums variiert werden. Bei einer Variante mit veränderlicher Schrittweite wird bei der Verschiebung des Passbereichs zur nächsten Stopp-Position eine Intensitätsänderung des detektierten Lichts zwischen aufeinanderfolgenden Stopp-Positionen bzw. spektralen Stützpunkten ermittelt und die Schrittweite wird in Abhängigkeit von der Intensitätsänderung verändert. Hierdurch kann eine Regelung der Schrittweite in Abhängigkeit von einer gemessenen Eigenschaft des Spektrums realisiert werden. Die Regelung kann beispielsweise in der Weise antiproportional erfolgen, dass spektrale Bereiche mit relativ starken Intensitätsänderungen mit relativ kleineren Schrittweiten und entsprechend höherer Stützstellendichte durchfahren werden, während ereignisärmere Spektralbereiche schneller, d.h. mit größeren Schrittweiten bzw. geringerer Stützstellendichte, durchfahren werden.

Es ist auch möglich, dass vor Beginn einer Aufnahme eines Spektrums Parameter einer Schrittweitenvariationsfunktion voreingestellt werden und die Schrittweite entsprechend der Schrittweitenvariationsfunktion gesteuert wird. Hier kann die Änderung der Schrittweite basierend auf vorbekannten Eigenschaften eines untersuchten Spektrumtyps optimiert werden. ---------------

## Patentansprüche

1. Verfahren zum spektral aufgelösten Messen optischer Eigenschaften von Proben mit:
Anordnen einer Probe in einer Messposition (MP);
Erzeugen von Licht mittels einer Lichtquelle (LQ);
Übertragen von spektralen Anteilen des Lichts als Anregungslicht in einem ersten optischen Pfad (P1) zu der Probe (P); und
Übertragen von durch die Probe emittiertem oder transmittiertem Licht in einem zweiten optischen Pfad (P2) zu einem Detektor (DET);
wobei in dem ersten optischen Pfad und/oder in dem zweiten optischen Pfad ein durchstimmbarer Monochromator (MC1, MC2) angeordnet ist;
Aufnehmen eines Spektrums des emittierten oder transmittierten Lichts über einen effektiven Spektralbereich durch Verschieben eines spektralen Passbereiches des durchstimmbaren Monochromators,
**dadurch gekennzeichnet, dass**
Licht in Form von Lichtpulsen mit vorgebbarer Pulsfrequenz genutzt wird;
der spektrale Passbereich des durchstimmbaren Monochromators für die Aufnahme eines Spektrums mit einer Verschiebungsgeschwindigkeit kontinuierlich von einer Anfangswellenlänge zu einer Endwellenlänge verschoben wird; und
die Pulsfrequenz des Lichts mit der Verschiebungsgeschwindigkeit des spektralen Passbereichs über eine Steuerung derart synchronisiert wird, dass innerhalb des effektiven Spektralbereichs eine Vielzahl von Messungen des emittierten oder transmittierten Lichts an einer entsprechenden Vielzahl von spektralen Stützpunkten (ST1, ST2, STn) erfolgt.

2. Verfahren nach Anspruch 1, **dadurch gekennzeichnet, dass** Anregungslicht in Form von Lichtpulsen mit vorgebbarer Pulsfrequenz auf die Probe eingestrahlt wird, wobei vorzugsweise Anregungslicht in Form von Lichtpulsen mit vorgebbarer Pulsfrequenz mittels einer gepulsten Lichtquelle (LQ) erzeugt wird.

3. Verfahren nach Anspruch 1 oder 2, **dadurch gekennzeichnet, dass** der spektrale Passbereich kontinuierlich mit konstanter Verschiebungsgeschwindigkeit von der Anfangsstellung zur Endstellung verschoben wird.

4. Verfahren nach Anspruch 1 oder 2, **dadurch gekennzeichnet, dass** der spektrale Passbereich mit einer variierenden Verschiebungsgeschwindigkeit von der Anfangsstellung zur Endstellung verschoben wird, wobei die Verschiebungsgeschwindigkeit in Abhängigkeit von mindestens einer Eigenschaft des Spektrums variiert wird.

5. Verfahren nach Anspruch 4, **dadurch gekennzeichnet, dass**
bei der Verschiebung des Passbereichs eine Intensitätsänderung des detektierten Lichts zwischen aufeinanderfolgenden spektralen Stützpunkten ermittelt wird und die Verschiebungsgeschwindigkeit des Passbereichs in Abhängigkeit von der Intensitätsänderung verändert wird.

6. Verfahren nach Anspruch 4, **dadurch gekennzeichnet, dass**
vor Beginn einer Aufnahme eines Spektrums Parameter einer Geschwindigkeitsvariationsfunktion voreingestellt werden und die Verschiebungsgeschwindigkeit entsprechend der Geschwindigkeitsvariationsfunktion gesteuert wird.

7. Verfahren nach Anspruch 4, 5 oder 6, **dadurch gekennzeichnet, dass** eine Steuerung oder Regelung der Verschiebungsgeschwindigkeit derart antiproportional zur Intensitätsänderung zwischen aufeinanderfolgenden spektralen Stützpunkten durchgeführt wird, dass spektrale Bereiche mit relativ starken Intensitätsänderungen mit relativ kleinerer Verschiebungsgeschwindigkeit und entsprechend höherer Dichte der Stützstellen und spektrale Bereiche mit relativ schwächeren Intensitätsänderungen mit relativ größerer Verschiebungsgeschwindigkeit und geringerer Dichte der Stützstellen durchfahren werden.

8. Verfahren nach einem der vorhergehenden Ansprüche, **dadurch gekennzeichnet, dass** die Aufnahme eines Spektrums über den effektiven Spektralbereich bei gleicher Synchronisierung der Pulsfrequenz mit der Verschiebungsgeschwindigkeit des spektralen Passbereichs mindestens einmal wiederholt wird und die für jede der Aufnahmen erhaltenen Messwerte wellenlängenrichtig addiert werden.

9. System (SYS) zum spektral aufgelöstem Messen optischer Eigenschaften von Proben mit:
einer Probenhalteeinrichtung zum Anordnen einer Probe in einer Messposition (MP);
einer Lichtquelle (LQ) zum Erzeugen von Licht;
einem Detektor (DET);
einer Steuereinheit (SE);
einem ersten optischen Pfad (OP1) zum Übertragen von spektralen Anteilen des Lichts als Anregungslicht zu der Probe (P); und
einem zweiten optischen Pfad (OP2) zum Übertragen von durch die Probe emittiertem oder transmittiertem Licht in zu dem Detektor (DET);
wobei in dem ersten optischen Pfad (OP1) und/oder in dem zweiten optischen Pfad (OP2) ein durch die Steuereinheit (SE) steuerbarer durchstimmbarer Monochromator (MC1, MC2) angeordnet ist;
wobei das System zum Aufnehmen eines Spektrums des emittierten oder transmittierten Lichts über einen effektiven Spektralbereich (SPE) durch Verschieben eines spektralen Passbereiches des durchstimmbaren Monochromators eingerichtet ist,
**dadurch gekennzeichnet, dass**
die Steuereinheit (SE) einen Betriebsmodus zur Aufnahme eines Spektrums aufweist, in welchem die Steuereinheit derart konfiguriert ist, dass
das System derart gesteuert wird, das Licht in Form von Lichtpulsen mit vorgebbarer Pulsfrequenz genutzt wird;
der spektrale Passbereich des durchstimmbaren Monochromators (MC1, MC2) für die Aufnahme eines Spektrums mit einer Verschiebungsgeschwindigkeit kontinuierlich von einer Anfangswellenlänge zu einer Endwellenlänge verschoben wird; und
die Pulsfrequenz des Lichts mit der Verschiebungsgeschwindigkeit des spektralen Passbereichs derart synchronisiert wird, dass innerhalb des effektiven Spektralbereichs eine Vielzahl von Messungen des emittierten oder transmittierten Lichts an einer entsprechenden Vielzahl von spektralen Stützpunkten (ST1, ST2, STn) erfolgt.

10. System nach Anspruch 9, **dadurch gekennzeichnet, dass** in dem Betriebsmodus die Lichtquelle (LQ) so gesteuert wird, dass Anregungslicht in Form von Lichtpulsen (PU) mit vorgebbarer Pulsfrequenz erzeugt wird.

11. System nach Anspruch 9 oder 10, **dadurch gekennzeichnet, dass** der durchstimmbare Monochromator ein dispersiver Monochromator mit einem verstellbaren dispersiven Element oder ein durchstimmbarer Filtermonochromator oder ein durchstimmbarer Interferenzmonochromator ist.

12. System nach Anspruch 9, 10 oder 11, **dadurch gekennzeichnet, dass** das System in einen Multitechnologieleser integriert ist. - - - - - - - - - - - - - - -
